(19) Europäisches Patentamt
European Patent Office
Office européen des brevets

(11) Veröffentlichungsnummer : **0 164 667**
**B1**

(12) **EUROPÄISCHE PATENTSCHRIFT**

(45) Veröffentlichungstag der Patentschrift : **30.09.87**

(51) Int. Cl.[4] : **C 08 L 59/02** // (C08L59/02, 21:00, 69:00)

(21) Anmeldenummer : **85106764.5**

(22) Anmeldetag : **01.06.85**

(54) **Thermoplastische Formmassen auf der Basis von Polyoxymethylen und polymeren Adipatcarbonatmischestern.**

(30) Priorität : **13.06.84 DE 3421864**

(43) Veröffentlichungstag der Anmeldung : **18.12.85 Patentblatt 85/51**

(45) Bekanntmachung des Hinweises auf die Patenterteilung : **30.09.87 Patentblatt 87/40**

(84) Benannte Vertragsstaaten : **BE DE FR GB IT NL**

(56) Entgegenhaltungen :
**DE-B- 1 238 210**
**FR-A- 2 389 657**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Lindner, Christian, Dr.**
**Riehlerstrasse 200**
**D-5000 Koeln 60 (DE)**
Erfinder : **Brudermanns, Karola**
**Dechant-Krey-Strasse 24**
**D-5090 Leverkusen 3 (DE)**
Erfinder : **Waniczek, Helmut, Dr.**
**Wolfskaul 2**
**D-5000 Koeln 80 (DE)**
Erfinder : **Uerdingen, Walter, Dr.**
**Humperdinckstrasse 41**
**D-5090 Leverkusen (DE)**
Erfinder : **Hurnik, Helmut, Dipl.-Ing.**
**Dechant-Krey-Strasse 24**
**D-5090 Leverkusen 3 (DE)**

**EP 0 164 667 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Thermoplastische Formmassen auf Basis von Polyoxymethylen, d. h. von Oxymethylen-Homopolymeren und Oxymethylen-Copolymeren, sind seit langem als Chemie Werkstoffe bekannt, die vor allem für technische Artikel verwendet werden. Es ist weiterhin bekannt, daß durch Mischen dieser Polyoxymethylene mit geeigneten Elastomeren, z. B. mit Polyestern aus aliphatischen Dicarbonsäuren und α,ω-Diolen gemäß US-PS 37 95 715 ; Copolyestern aus aromatischen Dicarbonsäuren und Diolen verschiedenen Molekulargewichts gemäß DE-OS 24 49 343 ; Copolymeren aus Ethylen und Vinylacetat oder Acrylestern gemäß DE-OS 17 69 560 oder mit Polyurethanen aus Polyhydroxylverbindungen, Polyisocyanaten und Kettenverlängerungsmitteln gemäß DE-OS 11 93 240 Produkte erhalten werden, deren Schlagzähigkeiten im Vergleich zu nicht modifiziertem Polyoxymethylen verbessert sind. Alle diese Gemische haben noch unbefriedigende mechanische Eigenschaften z. B. unzureichende Kerbschlagzähigkeit (insbesondere bei tiefen Temperaturen), Verarbeitungsbreite, Thermostabilität und thermoplastische Verarbeitbarkeit.

Es wurde gefunden, daß Mischungen von Polyoxymethylen mit aliphatischen Polymeren Adipatcarbonatmischestern verbesserte Eigenschaften aufweisen.

Die Erfindung betrifft demnach thermoplastische Formmassen aus

(A) 99,99-60 Gew.-Teilen Polyoxymethylen,

(B) 0-40 Gew.-Teilen eines Elastomeren mit einer Erweichungstemperatur unterhalb des Kristallitschmelzpunktes des Polyoxymethylens (A) und mit einer Einfriertemperatur zwischen — 120 und + 30 °C und

(C) 0,01-40 Gew.-Teilen eines aliphatischen, kautschukartigen, hochmolekularen Adipatcarbonatmischesters.

Die Menge des Polyoxymethylens (A) beträgt vorzugsweise 99,50 bis 80 Gew.-Teile, die Menge der Elastomerkomponente (B) vorzugsweise 0 bis 20 Gew.-Teile, und die Menge des Mischesters (C) vorzugsweise 0,05 bis 20 Gew.-Teile.

Besonders gute Ergebnisse werden mit einer Mischung erhalten, die sich aus 98,5 bis 90 Gew.-Teilen (A), 1,0 bis 10 Gew.-Teile (B) und 0,05 bis 5 Gew.-Teile (C) zusammensetzt.

Polyoxymethylene (A) sind insbesondere lineare Homopolymere von Formaldehyd oder Trioxan oder Trioxan-Copolymere.

Homopolymere von Formaldehyd oder Trioxan sind bevorzugt solche, deren Hydroxyl-Endgruppen in bekannter Weise chemisch, z. B. durch Veresterung oder Veretherung, gegen Abbau stabilisiert sind.

Unter Trioxan-Copolymeren sind Copolymere aus Trioxan und cyclischen Ethern, cyclische Acetalen und/oder linearen Polyacetalen zu verstehen, die primäre Alkoholgruppen aufweisen.

Als Comonomere für Trioxan kommen a) cyclische Ether mit 3, 4 oder 5, vorzugsweise 3 Ringgliedern, b) von Trioxan verschiedene cyclische Acetale mit 5 bis 11, vorzugsweise 5, 6, 7 oder 8 Ringgliedern und c) lineare Polyacetale, jeweils in Mengen von 0,1 bis 20, vorzugsweise 0,5 bis 10 Gew.-% in Frage. Am besten eignen sich Copolymere aus 99 bis 95 Gew.-% Trioxan und 1 bis 5 Gew.-% einer der vorgenannten Cokomponenten.

Als Comonomere für Trioxan sind besonders Verbindungen der Formel

$$\underbrace{CH_2 - [CR^1H]_x - [O-(CR^2H)_z]_y - O}_{} \qquad (I)$$

geeignet, in der (A) $R^1$ und $R^2$ gleich oder verschieden sind und jeweils ein Wasserstoffatom, einen aliphatischen Alkylrest mit 1 bis 6, vorzugsweise 1, 2, 3 oder 4 Kohlenstoffatomen oder einen Phenylrest bedeuten und (a) x gleich 1, 2 oder 3 und y gleich Null ist oder (b) x gleich Null, y gleich 1 und z gleich 3, 4, 5 oder 6 ist, oder (B) $R^1$ einen Alkoxymethylrest mit 2 bis 6, vorzugsweise 2, 3 oder 4 Kohlenstoffatomen oder einen Phenoxymethylrest bedeutet, wobei x gleich 1 und y gleich Null ist und $R^2$ die obengenannte Bedeutung hat.

Als cyclische Ether kommen von allem Epoxide, z. B. Ethylenoxid, Styroloxid, Propylenoxid und Epichlorhydrin sowie Phenylglycidylether in Frage.

Als cyclische Acetale eignen sich vor allem cyclische Formale von aliphatischen oder cycloaliphatischen α,ω-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B. Glykolformal (1,3-Dioxolan), Propandiolformal (1,3-Dioxan), Butandiolformal (1,3-Dioxepan), und Diglykolformal (1,3,6-Trioxocan) sowie 4-Chlormethyl-1,3-diocolan und Hexandiolformal (1,3-Dioxonan).

Auch ungesättigte Formale wie Butendiolformal (1,3-Dioxacyclopten-[5]) kommen in Frage.

Als lineare Polyacetale eignen sich sowohl Homo- oder Copolymere der vorstehend definierten cyclischen Acetale als auch lineare Kondensate aus aliphatischen oder cycloaliphatischen α,ω-Diolen mit aliphatischen Dialdehyden, vorzugsweise Formalaldehyd. Insbesondere werden Homopolymere cyclischer Formale von aliphatischen α,ω-Diolen mit 2 bis 8, vorzugsweise 2, 3 oder 4 Kohlenstoffatomen

verwendet, z. B. Poly(1,3-dioxolan), Poly(1,3-dioxan) und Poly(1,3-dioxepan).

Als zusätzliche Comonomere für Trioxan werden gegebenenfalls noch Verbindungen mit mehreren polymerisierbaren Gruppen im Molekül, z. B. Alkylglycidylformale, Polyglykoldiglycidylether, Alkandioldiglycedylether oder Bis(alkantriol)-triformale, verwendet, und zwar in einer Menge von 0,05 bis 5, vorzugsweise 0,1 bis 2 Gew.-%, bezogen auf die Gesamtmonomermenge.

Unter Alkylglycidylformalen sind Verbindungen der Formel (II) zu verstehen

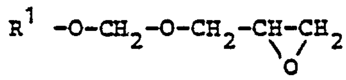

(II)

in der $R^1$ einen aliphatischen Alkylrest mit 1 bis 10, vorzugsweise 1 bis 5 Kohlenstoffatomen bedeutet. Besonders gut geeignet sind Alkylglycidylformale der obigen Formel mit linearen, gesättigten aliphatischen Alkylresten, z. B. Methylglycidylformal, Ethylglycidylformal, Propylglycidylformal und Butylglycidylformal.

Als Polyglykoldiglycidylether werden Verbindungen der Formel (III) bezeichnet

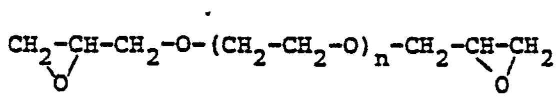

(III)

in der n eine ganze Zahl von 2 bis 5 bedeutet. Insbesondere eignen sich Polyglykoldiglycidylether der vorstehenden Formel, in der n 2 oder 3 bedeutet, z. B. Diethylenglykol-diglycidylether und Triethylenglykoldiglycidylether.

Als Alkandioldiglycidylether werden Verbindungen der Formel (IV) bezeichnet

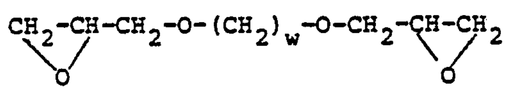

(IV)

in der w eine ganze Zahl von 2 bis 6, vorzugsweise 2, 3 oder 4 bedeutet. Insbesondere geeignet ist Butandioldiglycidylether.

Unter Bis(alkantriol)-triformalen werden Verbindungen mit einer linearen und zwei cyclischen Formalgruppen verstanden, insbesondere Verbindungen der Formel (V)

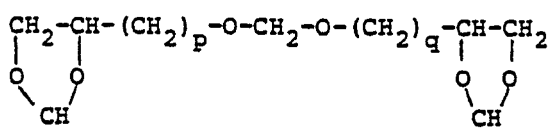

(V)

in der p und q jeweils eine ganze Zahl von 3 bis 9, vorzugsweise 3 oder 4, bedeuten. Es eignen sich vor allem symmetrische Bis-(alkantriol)-triformale der vorgenannten Formel, in der p und q die gleiche Zahl bedeuten, z. B. Bis-(1,2,5-pentantriol)-triformal und vorzugsweise Bis(1,2,6-hexantriol)-triformal.

Die Werte für die reduzierte spezifische Viskosität (RSV-Werte) des Polyoxymethylens betragen im allgemeinen 0,3 bis 2,0 $dl \cdot g^{-1}$, vorzugsweise 0,5 bis 1,5 $dl \cdot g^{-1}$ (gemessen in Butyrolacton, stabilisiert mit 2 Gew.-% Diphenylamin bei 140 °C in einer Konzentration von 0,5 g/100 ml).

Die Kristallitschmelzpunkte der Polyoxymethylene liegen im Bereich von 140 bis 180 °C, vorzugsweise 150-170 °C ; ihre Dichten betragen 1,38 bis 1,45 $g \cdot ml^{-1}$, vorzugsweise 1,40 bis 143 g $ml^{-1}$ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 100 °C, vorzugsweise zwischen 50 und 90 °C, hergestellt (vgl. z. B. US-PS 30 27 352). Als Katalysatoren werden hierbei beispielsweise Lewissäuren, z. B. Bortrifluorid und Antimonpentafluorid, und Komplexverbindungen von Lewissäuren, vorzugsweise Etherate, z. B. Bortrifluoriddietyletherat und Bortrifluorid-di-tert.-butyl-etherat, verwendet. Ferner sind geeignet Protonensäuren, z. B. Perchlorsäure, sowie salzartige Verbindungen, z. B. Triphenylmethylhexafluorophosphat, Triethyloxoniumtetrafluoroborat oder Acetylperchlorat. Die Polymerisation kann in Masse, Suspension oder Lösung erfolgen. Zur Entfernung instabiler Anteile werden die Copolymeren zweckmäßigerweise einem thermischen oder hydrolytischen kontrollierten, partiellen Abbau bis zu primären Alkoholendgruppen unterworfen (vgl. US-PS 31 03 499 und 32 19 623) :

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. US-PS 27 68 994 und 29 89 505).

Unter den als Komponente B verwendeten Elastomeren werden vorzugsweise Homo- und Copolymerisate von olefinisch ungesättigten Verbindungen der Formel (VI) verstanden :

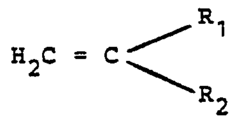 (VI)

in der $R_1$ ein Wasserstoffatom oder ein Methyl- oder Ethylrest ist und $R^2$ ein Wasserstoffatom, eine Carboxylgruppe oder die entsprechenden Salze mit einem Metall der I. bis III. Gruppe des periodischen Systems, insbesondere Alkali-, Erdalkali- oder Zinksalze, eine Alkylcarboxygruppe mit 2 bis 10, vorzugsweise 2 bis 5 Kohlenstoffatomen, eine Acyloxygruppe mit 2 bis 5, vorzugsweise 2 oder 3 Kohlenstoffatomen, eine Cyanogruppe, einen Phenylrest oder einen Vinylrest bedeutet und deren Erweichungstemperatur unterhalb des Kristallitschmelzpunktes des jeweiligen Polyoxymethylens, vorzugsweise zwischen + 50 °C und + 160 °C, und deren Einfriertemperatur zwischen — 120 °C und + 30 °C, vorzugsweise zwischen — 80 °C und 0 °C liegt.

Als Beispiele seien genannt :

1. Homo- und Copolymerisate von α-Olefinen, z. B. Polyethylen, Ethylen/Proylen-Copolymerisate, Ethylen/Acrylsäureester-Copolymerisate, Ethylen/Methylcrylsäureester-Copolymerisate, Ethylen-/Acrylsäure-Copolymerisate. Besonders geeignet sind Polyethylen sowie Copolymerisate aus Ethylen mit Vinylacetat und Copolymerisate aus Ethylen mit Acrylsäureester, vorzugsweise der Methyl-, Ethyl-, Butyl- oder 2-Ethylhexylacrylsäureester, in denen der Gewichtsanteil des Ethylens zwischen 40 und 90, vorzugsweise zwischen 50 und 80 % liegt.
2. Homo- und Copolymerisate von 1,3-Dienen mit 4 oder 5 Kohlenstoffatomen, z. B. Polybutadien, Polyisopren, Butadien/Styrol-Copolymere, Butadien/Acrylnitril-Copolymere.
3. Homo- und Copolymerisate von Vinylestern, z. B. Polyvinylacetat, Polyvinylpropionat, Polyvinylbutyrat.
4. Homo- und Copolymerisate von Acryl- und Methacrylsäureestern, z. B. Polyethylacrylat, Polybutylacrylat, Polybutylacrylat, Polybutylmethacrylat, Polyhexylmethacrylat, Poly-2-ethylhexylmethacrylat, Polyoctylmethacrylat.

Die Molekulargewichte (Gewichtsmittel) der erfindungsgemäß eingesetzten Elastomeren können in weiten Grenzen schwanken. Geeignet sind Produkte mit einem Molekulargewicht von 1 000 bis 1 000 000, vorzugsweise von 1 000 bis 300 000 ; besonders gute Ergebnisse wurden mit Mischkomponenten erhalten, die Molekulargewichte zwischen 5 000 und 150 000 besitzen. Die Schmelzindices (bei 190 °C und 2,16 kp Belastung) liegen im allgemeinen zwischen 1 g (10 Min. und 1 000 g/10 Min., vorzugsweise 1 g/10 Min. und 500 g/10 Min.).

Unter Adipatcarbonatmischestern werden Verbindungen der Formel (VII)

$$\left[ X-O-\underset{\overset{\|}{O}}{C}-\left(O-X'-O-\underset{\overset{\|}{O}}{C}\right)_k-O \right]_m \qquad \text{(VII)}$$

verstanden, worin

X und X′ Reste des Umsetzungsproduktes eines mehrwertigen Alkohols mit Adipinsäure mit einem Molekulargewicht von 800 bis 3 500 bedeuten und

k eine ganze Zahl von 0 bis 10 und

m eine ganze Zahl größer als 20, bevorzugt 22 bis 100, und die eine Grenzviskosität [η] (Staudinger Index) in Tetrahydrofuran von 0,8 bis 2,5 dl/g besitzen.

Als mehrwertige Alkohole für die den Resten X und X′ zugrundeliegenden Polyester kommen gegebenenfalls im Gemisch miteinander beispielsweise Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol, 1,4-Bis-(hydroxymethylcylohexan), 2-Methyl-1,3-propandiol, Diäthylenglykol, Triäthylenglykol, Tetraäthylenglykol, Dipropylenglykol und Dibutylenglykol in Frage.

Die aus Adipinsäure und den Alkoholen erhaltenen Umsetzungsprodukte sind Polyester mit endständigen Hydroxylgruppen. Ihre Molekulargewichte betragen 800 bis 3 500. Aus diesen Polyestern werden die Adipatcarbonatmischester hergestellt durch Umsetzung mit difunktionellen Kohlensäurearylestern. Diese entsprechen insbesondere der Formel (VIII)

$$ArO-\underset{\overset{\|}{O}}{C}-\left[O-X'-O-\underset{\overset{\|}{O}}{C}\right]_k-OAr \qquad \text{(VIII)}$$

worin

Ar ein substituierter oder unsubstituierter Arylrest mit 6 bis 18 C-Atomen, bevorzugt mit 6 C-Atomen,

ist und

k und X' die oben angegebene Bedeutung haben.

Solche Verbindungen sind bekannt.

Zur Umsetzung der Hydroxylgruppen enthaltenden Polyester und der Kohlensäurearylester sind geeignete Katalysatoren die Umesterungskatalysatoren, beispielsweise Alkali- oder Erdalkaliphenolate, Alkali- oder Erdalkalialkoholate und tertiäre Amine, beispielsweise Triäthylendiamin, Morpholin, Pyridin, Triäthylamin oder Metallverbindungen wie Antimontrioxid, Zinkchlorid, Titantetrachlorid und Titansäuretetrabutylester.

Der Katalysator wird in Mengen von 10 bis 300 ppm, bezogen auf das Gesamtgewicht der Polykondensationskomponenten, verwendet. Die Katalysatormengen können unterschritten werden, wenn die Ausgangsprodukte bei Berwendung der sauren Katalysatoren keine basischen, bei Verwendung der basischen Katalysatoren keine sauren Verunreinigungen enthalten ; möglichst geringe Katalysatormengen sind bevorzugt, um Eigenfarbe der Produkte zu vermeiden.

Vorzugsweise wird in Substanz umgesetzt, also in Abwesenheit von Lösungsmitteln. Es können jedoch auch unter den Reaktionsbedingungen inerte Lösungsmittel wie Kohlenwasserstoffe, insbesondere aromatische Kohlenwasserstoffe, verwendet werden.

Die Reaktionszeit richtet sich nach der Reaktionstemperatur, der Art und Menge des verwendeten Katalysators und nach dem gewünschten Molekulargewicht des Carbonatgruppen enthaltenden Polyesters. Im allgemeinen genügen 2 bis 48 Stunden, vorzugsweise 4 bis 24 Stunden.

Die entstehenden flüchtigen Kondensationsprodukte können während der Reaktion entfernt werden, bei diskontinuierlicher Verfahrensweise destillativ, bei kontinuierlicher Verfahrensweise durch fraktionierte Destillation. Bevorzugt wird mit Natriumphenolat als Katalysator eine Mischung aus Polyesterdiol und bifunktionellem Kohlensäurearylester, vorzugsweise Diphenylcarbonat, oder einer Mischung aus Diphenylcarbonat und Verbindungen der Formel (VIII) bei 110 bis 170 °C polykondensiert und anschließend bei 170 °C und höher durch Zufügen eines bifunktionellen Kohlensäurearylesters der Formel (VIII), bevorzugt mit k = 1, unter gleichzeitiger destillativer Abtrennung flüchtiger Kondensationsprodukte die Viskosität des Polykondensationsgemischs erhöht. Es erwies sich als günstig, die Polykondensation in Hochviskos- Reaktoren wie Knetern oder Schneckenmaschinen durchzuführen.

Die Polykondensation kann in bekannter Weise, z. B. durch Absenken der Reaktionstemperatur, Vernichten oder Entfernen des Katalysators oder durch sogenannte Stopper beendet werden. So hat es sich als vorteilhaft erwiesen, im Falle von Alkoholendgruppen Carbonsäurearylester und im Falle von Arylcarbonatendgruppen Alkohole als Stopper einzusetzen. Verwendet man bifunktionelle Verbindungen als Stopper, so ist es möglich, bei genauer Dosierung ein Abbrechen der Polykondensation unter Erhöhung des durchschnittlichen Molekulargewichts zu erreichen.

Die erfindungsgemäß geeigneten Adipatcarbonatmischesterpolymeren C sind bekannt und u. a. in DOS 28 23 161 und DOS 27 32 718 beschrieben.

Die Grenzviskosität (Staudinger Index) [η] der Komponente C wurde in Tetrahydrofuran bei 25 °C gemessen und ist in (dl/g) angegeben. Zur Definition s. H.G. Elias « Makromoleküle », Hüthing & Wepf-Verlag, Basel, Seite 265.

Die erfindungsgemäße Formmasse wird zweckmäßigerweise durch Mischen der Komponenten, die vorzugsweise jeweils in Form von Pulver oder Granulat vorliegen, und anschließend Homogenisieren hergestellt. Das Mischen erfolgt üblicherweise bei Raumtemperatur, vorzugsweise bei einer Temperatur von 15 bis 30 °C, und das Homogenisieren erfolgt in beliebigen, heizbaren Mischwerken, z. B. Walzen, Kalandern, Knetern oder Extrudern, bei einer Temperatur oberhalb des Kristallitschmelzpunktes des Polyoxymethylens, d. h. bei einer Temperatur von 150 bis 250 °C, vorzugsweise von 170 bis 220 °C ; besonders günstig ist eine Temperatur von 175 bis 200 °C. Alle Komponenten der erfindungsgemäßen Formmassen müssen sich in dem vorgenannten Temperaturbereich verarbeiten lassen. Bei der Homogenisierung kann unter Umständen eine partielle Vernetzung der Elastomerkomponente erfolgen, die aber in der Regel nicht nachteilig für die Eigenschaften der Mischung ist.

Die erfindungsgemäße Formmasse enthält gegebenenfalls noch die bekannten Zusatzstoffe, insbesondere Stabilisatoren und/oder Füllstoffe sowie Nukleierungsmittel, Antistatika, flammhemmende Mittel, Gleit- und Schmiermittel, Weichmacher, Pigmente, Farbstoffe, optische Aufheller oder Entformungshilfsmittel.

Als Stabilisatoren gegen den Einfluß von Wärme eignen sich insbesondere Polyamide, Amide mehrbasiger Carbonsäuren, Amidine, z. B. Dicyandiamid, Hydrazine, Harnstoffe, Poly-(N-vinyllactame) und Erdalkalisalze von aliphatischen, vorzugsweise hydroxylgruppenhaltigen, ein- bis dreibasigen Carbonsäuren mit 2 bis 20 Kohlenstoffatomen, z. B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 bis 13, vorzugsweise 7, 8 oder 9 Kohlenstoffatome aufweisen, mit Diolen, die 2 bis 6 Kohlenstoffatome enthalten. Als Lichtstabilisatoren sind α-Hydroxybenzophenonderivate und Benzotriazolderivate geeignet. Die Stabilisatoren werden in einer Menge von insgesamt 0,1 bis 5, vorzugsweise 0,5 bis 3 Gew-% (bezogen auf die gesamte Formmasse) eingesetzt.

Als Füllstoffe dienen beispielsweise Asbestfasern, Glasfasern, Glaspulver, Graphit, Ruß, Metallpulver, Metalloxide, Silikate, Carbonate und Molybdän(IV)-sulfid. Die Menge des Füllstoffes beträgt 10 bis 70,

vorzugsweise 20 bis 40 Gew-% (bezogen auf die gesamte Formmasse).

Die erfindungsgemäße Formmasse zeichnet sich insbesondere durch ein besonders günstiges, ausgewogenes Eigenschaftsprofil und -spektrum von mechanischen Gebrauchseigenschaften und thermoplastischen Verarbeitungseigenschaften aus.

Die Komponente C wirkt in relativ kleinen Mengendosierungen als Mittel zur Erhöhung der Kerbschlagzähigkeit der erfindungsgemäßen Formmassen, insbesondere auch in Abwesenheit der Komponente B ; in höherer Mengendosierung von C wirkt diese weichmachend und stellt ein besonders günstigen Weichmacher, insbesondere in bezug auf Migrationsstabilität und Tieftemperatureigenschaften dar. Bei allen diesen Dosierungen wird die Verarbeitbarkeit der Formmassen wesentlich verbessert. Im Vergleich zu bekannten Polyurethankomponenten sind als besonderer Vorteil die höhere Thermostabilität und die besseren mechanischen Eigenschaften der Formmassen überraschend, so daß die Formmassen u. a. besseren Rohton und verringerten Abbau aufweisen und sich deshalb bei höheren Temperaturen, ggf. unter stärkerer Scherung thermoplastisch, verarbeiten lassen.

Die erfindungsgemäße Formmasse läßt sich mechanisch, z. B. durch Zerhacken oder Mahlen, zu Granulaten, Schnitzeln, Flocken oder Pulver zerkleinern. Sie ist thermoplastisch und wird durch Spritzgießen, Strangpressen, Schmelzpinnen oder Tiefziehen verarbeitet. Sie eignet sich als technischer Werkstoff zur Herstellung von Halbzeug und Fertigteilen, wie Formkörpern, z. B. Bändern, Stäben, Platten, Filmen, Rohren und Schläuchen, sowie Maschinenteilen, z. B. Gehäusen, Zahnrädern, Lagerteilen und Steuerelementen.

Die nachfolgenden Beispiele beschreiben die vorliegende Erfindung. Die in diesen Beispielen benutzten Größen wurden wie folgt bestimmt :

RSV-Wert : Messung in Butyrolacton, stabilisiert mit 2 Gew.-% Diphenylamin, bei 140 °C in einer Konzentration von 0,5 g/100 ml.

Schmelzindex : Messung bei 190 °C und 2,16 kp Belastung, entsprechend ASTM-D-1238

Durometer-Härte : Nach ASTM-D-2240

Erweichungspunkt : Messung gemäß der Methode nach ASTM-E-28

Dichte : Nach DIN 53479

Verarbeitung

Verschiedene Gewichtsanteile der Komponenten A (Polyoxymethylen), B (Elastomer) und C werden in Pulver- oder Granulatform, gegebenenfalls unter Zusatz von geeigneten Stabilisatoren, bei Zimmertemperatur gemischt, in einem Zweischneckenextruder bei 200 °C aufgeschmolzen, homogenisiert und als Strang ausgepreßt. Die Verweilzeit im Extruder beträgt ca. 4 Minuten. Der Strang wird in kurze Stücke geschnitten und das erhaltene getrocknete Granulat auf einer Spritzgußmaschine zu Platten von 60 × 60 × 2 mm verarbeitet.

Beschreibung der Formmassenkomponenten

1) Komponente Al

Copolymerisat aus 98 Gew.-% Trioxan und 2 Gew.-% Ethylenoxid, das primäre Alkoholendgruppen aufweist und einen RSV-Wert von 0,8 dl · $g^{-1}$, eine Dichte von 1,41 g $cm^{-3}$ und einen Kristallitschmelzpunkt von 166 °C besitzt.

Als Stabilisator diente 0,1 % Calcium-Ricinoleat und 0,5 % 1,6-Bis-[β-(3.5-di-tert.butyl-4-hydroxyphenyl)-propionyloxy]-hexan.

Komponente A2

Polyformaldehyd, dessen Halbactalendgruppen durch Umsetzung mit Essigsäureanhydrid verschlossen sind und der einen RSV-Wert von 0,8 dl · $g^{-1}$, eine Dichte von 1,43 g · $cm^{-3}$ und einen Kristallitschmelzpunkt von 181 °C besitzt.

Als Stabilisator diente 1 % Mischpolyamid aus Caprolactam, Hexamethylendiamin, Adipinsäure und Sebacinsäure und 0,3 % Bis-[β-(3,5-di-tert.butyl-4-hydrophenyl)-propionyloxy]-hexan.

2) Komponente B1

Copolymerisat aus Ethylen und Vinylacetat mit einem Vinylacetat-Anteil von 32-34 Gew.-%, das einen Schmelzindex von 22-28 g/10 Minuten aufweist. Die Dichte beträgt 0,957 g · $cm^{-3}$ und die Durometer-Härte 67 A. Erweichungspunkt = 116 °C.

3) Komponente C1

2 000 Gew.-Teile eines Polyesterdiols aus Adipinsäure und einer Mischung aus n-Hexan-1,6-diol/Neopentylglykol im Verhältnis 65 : 35 vom mittleren Molekulargewicht $\bar{M}_n$ 2 000) bestimmt durch OH-Zahl-Messung), 214 Gew.-Teile Diphenylcarbonat und 0,12 Gew.-Teile Natriumphenolat werden unter Rühren und einem Vakuum von 1,5 Torr 2 Stunden bei 130 °C und 1 Stunde bei 150 °C gerührt, wobei man flüchtige Polykondensationsprodukte, die größtenteils aus Phenol bestehen, abdestilliert. Unter festgesetzter Destillation steigert man die Temperatur für 6 Stunden auf 180 °C und 2 Stunden auf 195 °C. Das so erhaltene Produkt, eine farblose kautschukartige weiche Masse, besitzt einen Staudinger-Index [η], gemessen in THF, von 0,81.

Komponente C2

2 000 Gew.-Teile eines Polyesterdiols aus Adipinsäure und einer Mischung aus n-Hexan-1,6-diol/Neopentylglykol im Verhältnis 65 : 35 vom mittleren Molekulargewicht $\bar{M}_n$ 2 000 (bestimmt durch OH-Zahl-Messung), 214 Gew.-Teile Diphenylcarbonat und 0,12 Gew.-Teile Natriumphenolat werden unter Rühren und einem Vakuum von 1,5 Torr 2 Stunden bei 130 °C und 1 Stunde bei 150 °C gerührt, wobei man flüchtige Polykondensationsprodukte, die zum größten Teil aus Phenol bestehen, abdestilliert. Unter Fortgesetzter Destillation steigert man die Temperatur für 4 Stunden auf 180 °C ; während dieser Zeit werden 20 Gew.-Teile eines über —OCOO— Brücken verlängerten Polytetrahydrofurandiols mit Phenylcarbonatendgruppen ($\bar{M}_n$ des Polytetrahydrofuran 2 000, Verlängerungsgrad gleich 2) zudosiert, anschließend steigert man unter langsamem Rühren oder Kneten die Reaktionstemperatur auf ca. 185 bis 190 °C für 5 Stunden. Das Produkt, eine farblose kautschukartige Masse, besitzt einen Staudinger-Index [η], gemessen in THF, von 1,5.

Komponente D (nicht erfindungsgemäß)

Polyesterurethan auf der Basis eines Polyesterdiols aus Adipinsäure und einer Mischung aus n-Hexandiol-1,6/Neopentylglykol (im Verhältnis 63 : 35) vom mittleren Molekulargewicht $\bar{M}_n = 2\,000$ (bestimmt durch OH-Zahl-Messung) ; Shore-Härte A : 72 und D : 18 ; Dichte : 1,14 g/cm³.

Thermostabilitätsbeurteilung

Die Formmassen werden nach der beschriebenen Extruderbehandlung zu Formplatten verspritzt. Der Rohton der Platten wird visuell beurteilt.

\+ = guter Rohton
++ = sehr guter Rohton, besser als +
— = Verfärbung

(Siehe Tabelle Seite 8 f.)

Eigenschaftsvergleich der Formmassen

| Nr. | Komponente in Gew.-% | | | Fallhöhe[2] (cm) | Thermostabilität | Kerbschlagzähigkeit kJ/m² [1] |
|---|---|---|---|---|---|---|
| 1 | 100A1 | - | - | 19 | + | |
| 2 | 100A1 | - | - | 14 | + | |
| 3 | 95A1 | 5B1 | - | 200 | + | |
| 4 | 95A1 | - | 5C1 | 240 | ++ | |
| 5 | 95A1 | - | 5C2 | 280 | ++ | 20 |
| 6 | 95A2 | - | 5C1 | 230 | ++ | |
| 7 | 95A1 | - | 5D | 160 | - | 12 |
| 8 | 95A2 | - | 5D | 95 | - | |
| 9 | 95A1 | 4,5B1 | 0,5D | 260 | + | |
| 10 | 95A1 | 2,5B1 | 2,5C1 | 300 | ++ | |
| 11 | 95A1 | 4,5B1 | 0,5C1 | 300 | ++ | |
| 12 | 95A1 | 4,9B1 | 0,1C1 | 290 | ++ | |
| 13 | 95A1 | 2,5B1 | 2,5C2 | 300 | ++ | |
| 14 | 95A1 | 4,5B1 | 0,5C2 | 300 | ++ | |
| 15 | 95A1 | 4,9B1 | 0,1C2 | 300 | ++ | |

Nummern 1, 2, 3, 7, 8 und 9 dienen dem Vergleich

[1] Nach DIN 53 753

[2] Schlagzähigkeit : Messung mit Hilfe eines Falltests. Die jeweils zu prüfende Platte wird dabei auf einen Fahmen aufgespannt und einer Schlagbeanspruchung dadurch ausgesetzt, daß man einen Fallhammer mit einem Gewicht von 500 g, dessen auftreffender Teil als Halbkugel mit einem Durchmesser von 2 cm ausgebildet ist, aus verschiedenen Höhen reibungsarmgeführt senkrecht auf die Platte fallen läßt. Als Maß für die Schlagzähigkeit wird die Höhe angegeben, bei der 50 % der Platten zerstört werden (Mittelwert aus 25 Fallversuchen). Die maximale Fallhöhe beträgt 300 cm.

**Patentanspruch**

Formmassen aus einer Mischung von
(A) 99,99-60 Gew.-Teilen eines Polyoxymethylens,
(B) 0-40 Gew.-Teile eines Elastomers mit einer Erweichungstemperatur unterhalb des Kristallitschmelzpunktes des Polyoxymethylens A) und mit einer Einfriertemperatur zwischen —120° und + 30 °C und
(C) 0,01 bis 40 Gew.-Teilen eines aliphatischen kautschukartigen, hochmolekularen Adipatcarbonatmischesters der Formel (VII)

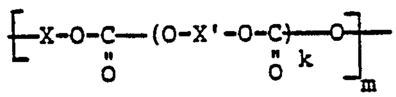

worin
X und X' Reste des Umsetzungsproduktes eines mehrwertigen Alkohols mit Adipinsäure mit einem Molekulargewicht von 800 bis 3 500 bedeuten,
k eine ganze Zahl von 0 bis 10 und
m eine ganze Zahl größer als 20, der eine Grenzviskosität [η] (Staudinger Index) in Tetrahydrofuran von 0,8 bis 2,5 dl/g besitzt.

**Claim**

Moulding compositions consisting of a mixture of
(A) 99.99-60 parts by weight of a polyoxymethylene,
(B) 0-40 parts by weight of an elastomer with a softening temperature below the crystallite melting point of the polyoxymethylene A) and with a freezing temperature of between —120° and + 30 °C and
(C) 0.01 to 40 parts by weight of an aliphatic rubber-like, high molecular weight adipate carbonate mixed ester of the formula (VII)

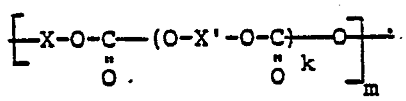

wherein
X and X' denote residues of the reaction product of a polyhydric alcohol and adipic acid with a molecular weight of 800 to 3 500,
k an integer from 0 to 10 and
m an integer greater than 20,
which has an intrinsic viscosity [η] (Staudinger Index) in tetrahydrofuran of 0.8 to 2.5 dl/g.

**Revendication**

Matières à mouler constituées d'un mélange comprenant :
(A) 99,99-60 parties en poids d'un polyoxyméthylène,
(B) 0-40 parties en poids d'un élastomère ayant une température de ramollissement inférieure au point de fusion des cristallites du polyoxyméthylène (A) et une température de solidification se situant entre —120° et + 30 °C, et
(C) 0,01 à 40 parties en poids d'un ester mixte d'adipate/carbonate aliphatique caoutchouteux de poids moléculaire élevé et répondant à la formule (VII) :

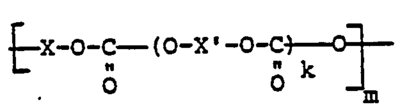

dans laquelle
X et X' représentent des radicaux du produit réactionnel d'un alcool polyvalent avec l'acide adipique, ayant un poids moléculaire de 800 à 3 500,
k représente un nombre entier de 0 à 10, et
m représente un nombre entier supérieur à 20,
cet ester ayant une viscosité limite [η] (indice de Staudinger) de 0,8 à 2,5 dl/g dans le tétrahydrofuranne.